(19) Europäisches Patentamt
European Patent Office
Office européen des brevets

(11) **EP 2 168 787 B1**

(12) **EUROPEAN PATENT SPECIFICATION**

(45) Date of publication and mention
of the grant of the patent:
**04.09.2013 Bulletin 2013/36**

(51) Int Cl.:
***B60C 9/22*** *(2006.01)*  ***B60C 9/00*** *(2006.01)*
***B60C 9/18*** *(2006.01)*  ***B60C 9/20*** *(2006.01)*
***D07B 1/06*** *(2006.01)*

(21) Application number: **08790708.5**

(22) Date of filing: **27.06.2008**

(86) International application number:
**PCT/JP2008/061743**

(87) International publication number:
**WO 2009/001931 (31.12.2008 Gazette 2009/01)**

(54) **PNEUMATIC TIRE**

LUFTREIFEN

PNEUMATIQUE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **28.06.2007 JP 2007171067**

(43) Date of publication of application:
**31.03.2010 Bulletin 2010/13**

(73) Proprietor: **Bridgestone Corporation
Tokyo 104-8340 (JP)**

(72) Inventor: **AOYAMA, Masanori
Kodaira-shi
Tokyo 187-0031 (JP)**

(74) Representative: **Waldren, Robin Michael et al
Marks & Clerk LLP
90 Long Acre
London
WC2E 9RA (GB)**

(56) References cited:
EP-A1- 2 106 930          WO-A1-2008/090680
JP-A- 08 132 821          JP-A- 10 250 314
JP-A- 2002 544 044        US-A- 4 235 274
US-A1- 2002 033 213

**Description**

Technical Field

The present invention relates to a pneumatic tire which employs a steel cord as a rubber reinforcing member, and particularly to a pneumatic tire aiming at increasing its durability.

Background Art

In order for pneumatic tires, particularly for tires applied in trucks or buses which travel supporting high load for a long period of time, to endure a heavy-duty for a long period of time and give a stable performance, high strength and rigidity, and dimensional stability are essential. Particularly, the crown portion of a tire is constantly subjected to a tensile input in the circumferential direction by the internal pressure to creep when in use, so that the circumferential length increases, thereby generating deformation. By this, the durability deteriorates, and/or the shape of the cross section of the tire changes to deteriorate the abrasion characteristics.

As a countermeasure against these deteriorations, for example, a technique is disclosed in JP-A-2623003, in which technique a separation is effectively prevented without increasing the weight of the tire by placing 2 layers of intersecting belts on a tread portion around a carcass, and then by further placing, below the belts, at least one strip-shaped crown reinforcing layer comprising reinforcing elements which are a number of wavy (or zigzag-shaped) cords (or filaments) along the tire equator.

The late published document EP-A- 2 106 930 falls under A. 54(3) EPC and also discloses a crown reinforcement for a radial tire. US 2002/0033213 discloses a crown reinforcement for a radial tire.

Disclosure of the Invention

Problem to be Solved by the Invention

However, in view of demands for strength against abrasion and demands for high drivability of recent years, just applying a crown reinforcing layer to a tire as described in Patent Document 1 is not necessarily enough any more in terms of the durability. And a further increase in the durability of a tire is desired today.

Accordingly, an object of the present invention is to provide a pneumatic tire whose durability is attained to be increased more than ever.

Means for Solving the Problem

Under the circumstances of recent years in which appropriate rigidities are demanded not only in the tire circumferential direction but also in the tire width direction due to demands for strength against abrasion and demands for high drivability, the present inventor found that, for example, when rigidity is given in the width direction of the tire with which a crown reinforcing layer is provided as described in Patent Document 1, a large shear deformation on the crown reinforcing layer which is oriented in the circumferential direction occurs, and that there arises a concern of a separation especially at the outside, in the tire width direction, of the crown reinforcing layer. Based on this finding, the present inventor further studied intensively to discover that, when a straight steel cord having a high breaking elongation is placed on the outside, in the tire width direction, of the crown reinforcing layer in order for the cord itself to elongate moderately to reduce a shear deformation to be generated, the tire may be devised to increase its durability more than that in the conventional crown reinforcing layer, thereby completing the present invention.

That is, the pneumatic tire of the present invention is a pneumatic tire according to claim 1.

Preferable examples of pneumatic tires of the present invention are as follows:

a pneumatic tire, wherein the breaking strength (To) per unit width of the outside strip and the breaking strength (Ti) per unit width of the inside strip satisfy the following formula:

$$To/Ti \geq 0.92;$$

a pneumatic tire, wherein the breaking elongation (Eo) of the steel cords of the outside strips and the breaking elongation (Ei) of the steel cords of the inside strip satisfy the following formula:

$$2.5 \geq Eo/Ei \geq 1.05;$$

a pneumatic tire, wherein the cord diameter (Do) of the steel cords of the outside strip and the cord diameter (Di) of the steel cords of the inside strip satisfy the following formula:

$$1.15 \geq Do/Di \geq 0.85;$$

and

a pneumatic tire, wherein the width (Wi) of the crown reinforcing layer of the inside strip with respect to the total width (Wt) of the crown reinforcing layer satisfies the following formula:

$$0.95 \times Wt \geq Wi \geq 0.5 \times Wt.$$

Effects of the Invention

The present invention can provide a pneumatic tire devised to increase in its durability more than ever.

Brief Description of the Drawings

Fig. 1 is an enlarged cross-sectional view illustrating the neighborhood of a tread portion of one example of pneumatic tires of the present invention.
Fig. 2 is a cross-sectional view illustrating one example of a steel cord applicable to the present invention.
Fig. 3 is a cross-sectional view illustrating another example of a steel cord applicable to the present invention.

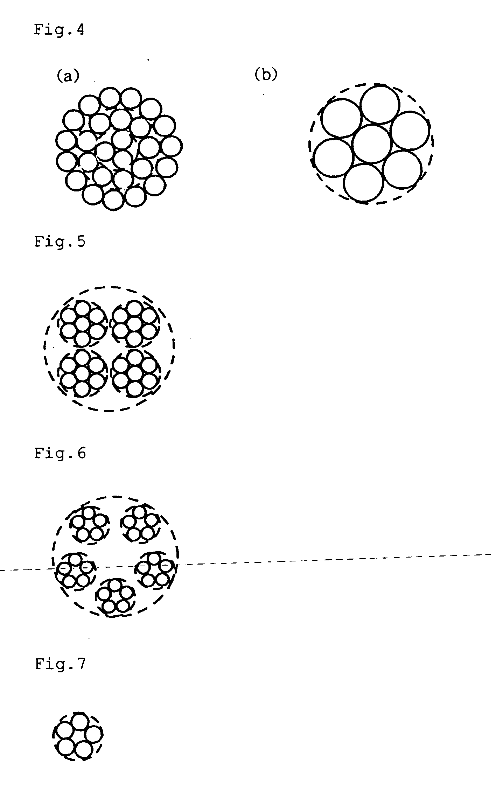

Fig. 4 (a) and (b) are cross-sectional views illustrating a steel cord employed in Examples.
Fig. 5 is a cross-sectional view illustrating another steel cord employed in Examples.
Fig. 6 is a cross-sectional view illustrating another steel cord employed in Examples.
Fig. 7 is a cross-sectional view illustrating another steel cord employed in Examples.
Fig. 8 is a cross-sectional view illustrating another steel cord employed in Examples.
Fig. 9 is a plan view illustrating a rubber steel cord complex employed in Examples in which the steel cords are in a wavy shape.

Description of Symbols

1 carcass
2 belt
3 crown reinforcing layer
10 tire
20 steel cord

Best Mode for Carrying out the Invention

In the following, embodiments of the present invention will be described specifically.

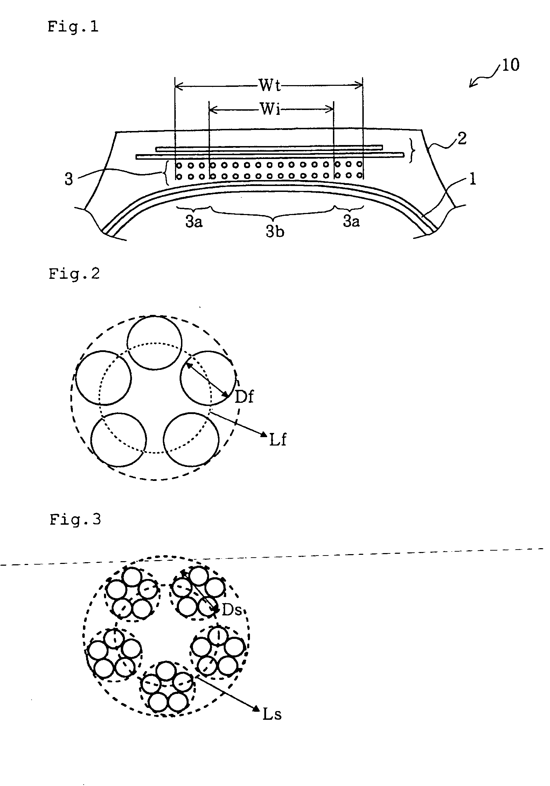

Fig. 1 is an enlarged cross-sectional view illustrating the neighborhood of a tread portion of one embodiment of pneumatic tires of the present invention. A tire 10 illustrated in the figure comprises at least one layer of carcass 1 which extends between at least one pair of bead cores (not illustrated) and 2 to 4 layers (2 layers in the illustrated example) of belts 2 on the outer circumference of the carcass 1. In the belt 2, a known belt structure may preferably be adopted, in which structure a plurality of cords or filaments which have a tilt angle of 20 to 50° with respect to the plane including the center circumference of the tire, that is, a tire equatorial plane, and intersect each other between the layers are employed as reinforcing elements.
The tire 10 comprises at least one layer (two layers in the illustrated example) of crown reinforcing layer 3 which is formed by strips constituted by orienting a rubber steel cord complex as a whole in the tire circumferential direction, inside the inner circumference of the belt 2 and outside the outer circumference of the carcass 1. In the present invention, the crown reinforcing layer 3 is optionally on the outer circumference of the belt 2 or between layers of the belt 2 and not particularly restricted.

In the present invention, it is essential that the crown reinforcing layer 3 be divided into three parts which are a pair of outside strips 3a positioned at both sides of the tire width direction, and an inside strip 3b therebetween; the breaking elongation (Eo) of steel cords of the outside strips 3a and the breaking elongation (Ei) of steel cords of the inside strip 3b satisfy the following formula:

$$Eo > Ei;$$

and preferably the following formula:

$$2.5 \geq Eo/Ei \geq 1.05;$$

and
the steel cords of the outside strips 3a be straight. That is, in the present invention, in order to reduce a shear deformation generated on the outside strips 3a, a steel cord which elongates moderately by itself, is straight and has a higher breaking elongation than that of the inside strip 3b is applied to the outside strips 3a.

The breaking elongation of the steel cords of the outside strips 3a is preferably not less than 1.8%.

The steel cord which is straight and has a high breaking elongation placed in the outside strips 3a does not cause a separation since it has sufficient elongation with respect to a generated shear deformation. In order to allow a wavy bent steel cord to have sufficient elongation, the bend amount of the steel cord needs to be large. This affects the external appearance of the tire, and therefore, a straight steel cord needs to be employed in the present invention.

Since it is impossible to obtain sufficient hoop effect which is the intended purpose of the circumferential direction crown reinforcing layer when steel cords which are straight and have high breaking elongation are placed on the crown reinforcing layer 3 over the total width of the tire, steel cords which are straight and have high breaking elongation are needed only on the outside strips 3a.

In the present invention, the breaking strength (To) per unit width of the outside strip 3a and the breaking strength (Ti) per unit width of the inside strip 3b preferably satisfy the following formula:

$$To/Ti \geq 0.92.$$

When the value is less than 0.92, the total case rigidity of the tire is largely inadequate as compared to a tire in which the inside strip 3b is employed over the total width of the tire.

Further, the cord diameter (Do) of the steel cords of the outside strips 3a and the cord diameter (Di) of the steel cords of the inside strip 3b preferably satisfy the following formula:

$$1.15 \geq Do/Di \geq 0.85.$$

When the value is less than 0.85 or more than 1.15, a large step is generated between the outside strips 3a and the inside strip 3b to reduce the durability.

Still further, in order to obtain the desired effect of the present invention and sufficient hoop effect, the width (Wi) of the inside strip 3b with respect to the total width (Wt) of the crown reinforcing layer preferably satisfies the following formula:

$$0.95 \times Wt \geq Wi \geq 0.5 \times Wt.$$

Still further, each of the end counts of the cords of the outside strips 3a and the inside strip 3b is preferably 20 to 30 cords/50 mm.

A steel cord which is straight and has a high breaking elongation applicable to the outside strips 3a may be attained, for example, by the following method. By twisting steel cords which have a 1 x n single-twist structure or an m x n multiple-twist structure together in a short pitch such that the twist angle with respect to the direction of the axis of the cord is not more than 69°, preferably not more than 65° and not less than 55°, a sufficient elongation may be secured. When the twist angle is less than 55°, there arises a concern of a break due to friction between the wires.

In order to enhance penetration of rubber, the filaments which constitute the cords may be combined such that the filaments have different diameters, or at least one filament may be bent in a 2- or 3-dimensional shape. Alternatively, steel cords having a 1 x n single-twist structure and/or an m x n multiple-twist structure may be twisted together with a sufficient space.

Preferable examples of suitable steel cords include those which have a 1 x n single-twist structure which is formed by twisting steel filaments in the number of n together wherein n is 3 to 6, or an m x n multiple-twist structure which is formed by twisting strands in the number of m wherein m is 2 to 5, each of the strands being formed by twisting steel filaments in the number of n together wherein n is 3 to 9, and have a twist angle with respect to the direction of the axis of the cord of not more than 69°.

Other preferable examples of suitable steel cords include those which have a 1 x n single-twist structure which is formed by twisting steel filaments in the number of n together wherein n is 3 to 6, and in which the length (Lf) of a circle which connects the centers of the steel filaments and the sum (n x Df) of the diameters (Df) of the steel filaments satisfy the following formula:

$$2.8 \geq Lf/(n \times Df) \geq 1.15,$$

as illustrated in Fig. 2 as one example, or those which have an m x n multiple-twist structure which is formed by twisting strands in the number of m formed by twisting steel filaments in the number of n together wherein n is 3 to 9, and in which the length (Ls) of a circle which connects the centers of the strands and the sum (m x Ds) of the diameters (Ds) of the strands satisfy the following formula:

$$2.8 \geq Ls/(m \times Ds) \geq 1.15,$$

as illustrated in Fig. 3 as one example.

Here, when the values of Lf / (n x Df) and Ls / (m x Ds) are more than 2.8, the effect of total weight due to the increase in the diameter of the cords may not be ignored. On the other hand, when the values are less than 1.15, a sufficient elongation may not be secured. Also in this case, in order to enhance penetration of rubber, the filaments which constitute the cords may be combined such that the filaments have different diameters, or at least one filament may be bent in a 2- or 3-dimensional shape.

It is noted that the tires of the present invention may be any tires as long as the tires are those to which the above-described rubber-steel cord complex is applied as a reinforcing layer, and especially as a reinforcing member of the crown reinforcing layer. By this, desired effects of the present invention can be obtained. Other specific structures or materials of the tire may be suitably selected by a conventional method and not particularly restricted.

Examples

In the following, the present invention will be described by way of examples.

<Examples and Comparative Examples>

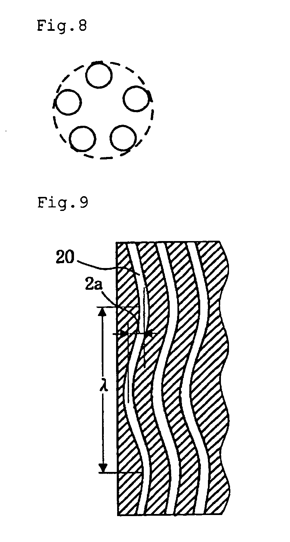

Rubber steel cord complexes of Comparative Examples and Examples were prepared in the conditions shown in the below Tables 1 and 2. These were employed as a crown reinforcing layer 3 as illustrated in Fig. 1 and test tires of the sizes shown in the Tables were produced respectively. Each of the width (Wi) of the inside strips was about 85% of the total width (Wt) of the crown reinforcing layer. As for wavy bend of 2a/λ in the tables, - steel cords 20 were placed being bent in a wavy shape (wavelength: λ, amplitude: 2a) in parallel as illustrated in the plan view in Fig. 9, and embedded in rubber to prepare a rubber-steel cord complex.

The following evaluations were conducted for each of the test tires.

As for the external appearance of the tires, when unevenness was observed on the sides of the tires by a visual inspection, the appearance was designated as "x", and when unevenness was not observed, the appearance was designated as "○".

As for the diameter growth, in tires having the same tire size when inflated to an inner pressure, in the case where the diameter increased largely as compared to the case in Comparative Example 1 or 4, the diameter growth was designated as "x", and in cases where the diameter did not increase largely as compared to the case in Comparative Example 1 or 4, the diameter growth was designated as "○".

As for the separation, the existence of separation was observed by a holographic testing after the tire was subjected to a drum running test under conditions of a normal inner pressure; 120% of a normal load; velocity: 60 km/h; and 70,000 km.

The obtained results are shown in the below Tables 1 and 2.

Examples of the present invention described ideal states, and when Examples are used as rubber articles, for example, used as actual tires, there are cases where some deformations occur. The state after the actual deformation is also within the scope of the present invention.

[Table 1]

| | | | Comparative Example 1 | Example 1 | Example 2 | Comparative Example 2 |
|---|---|---|---|---|---|---|
| | tire size | | 495/45R225 | 495/45R225 | 495/45R225 | 495/45R225 |
| inside strip | corresponding figure | | Fig. 4(a) | Fig. 4(a) | Fig. 4(a) | Fig. 5 |
| | cord structure | | 3+9+15×0.22 (mm) | 3+9+15×0.22 (mm) | 3+9+15×0.22 (mm) | 4×(1+6)×0.21 (mm) |
| | cord shape | | wavy bent | wavy bent | wavy bent | short pitch structure |
| | breaking elongation (%) | | 4.2 | 4.2 | 4.2 | 5.1 |
| | breaking strength (N) | | 2730 | 2730 | 2730 | 2650 |
| | cord diameter (mm) | | 1.35 | 1.35 | 1.35 | 1.52 |
| | wavy bend $2a/\lambda$ | | 0.067 | 0.067 | 0.067 | – |
| | twist angle with respect to direction of cord axis (°) | | – | – | – | 59.0 |
| | $Lf/(n×Df)$ | | – | – | – | – |
| | $Ls/(m×Ds)$ | | – | – | – | 1.11 |
| | end count (cords/50 mm) | | 22.5 | 22.5 | 22.5 | 22.5 |
| outside strip | corresponding figure | | Fig. 4(a) | Fig. 5 | Fig. 6 | Fig. 5 |
| | cord structure | | 3+9+15×0.22 (mm) | 4+(1+6)×0.21 (mm) | 5×5×0.20 (mm) | 4×(1+6)×0.21 (mm) |
| | cord shape | | wavy bent | short pitch structure | spaced structure | short pitch structure |
| | breaking elongation (%) | | 4.9 | 5.1 | 5.0 | 5.1 |
| | breaking strength (N) | | 2730 | 2650 | 2610 | 2650 |
| | cord diameter (mm) | | 1.35 | 1.52 | 1.55 | 1.52 |
| | wavy bend $2a/\lambda$ | | 0.082 | – | – | – |
| | twist angle with respect to direction of cord axis (°) | | – | 59.0 | 72.0 | 59.0 |
| | $Lf/(n×Df)$ | | – | – | – | – |
| | $Ls/(m×Ds)$ | | – | 1.11 | 1.17 | 1.11 |
| | end count (cords/50 mm) | | 22.5 | 22.5 | 22.5 | 22.5 |
| evaluation | external appearance | | × | O | O | O |
| | diameter growth | | O | O | O | × |
| | separation | | O | O | O | O |

EP 2 168 787 B1

[Table 2]

| | | | Comparative Example 3 | Comparative Example 4 | Example 3 | Example 4 |
|---|---|---|---|---|---|---|
| | | tire size | 495/45R225 | 225/70R16 | 225/70R16 | 225/70R16 |
| inside strip | | corresponding figure | Fig. 4 (a) | Fig. 4 (b) | Fig. 4 (b) | Fig. 4 (b) |
| | | cord structure | 3+9+15×0.22 (mm) | (1+6) ×0.34 (mm) | (1+6) ×0.34 (mm) | (1+6) ×0.34 (mm) |
| | | cord shape | wavy bent | wavy bent | wavy bent | wavy bent |
| | | breaking elongation (%) | 4.2 | 3.8 | 3.8 | 3.8 |
| | | breaking strength (N) | 2730 | 1920 | 1920 | 1920 |
| | | cord diameter (mm) | 1.34 | 1.05 | 1.05 | 1.05 |
| | | wavy bend $2a/\lambda$ | 0.67 | 0.60 | 0.60 | 0.60 |
| | | twist angle with respect to direction of cord axis (°) | – | – | – | – |
| | | Lf/(n×Df) | – | – | – | – |
| | | Ls/(m×Ds) | – | – | – | – |
| | | end count (cords/50 mm) | 22.5 | 19.5 | 19.5 | 19.5 |
| outside strip | | corresponding figure | Fig. 4 (a) | Fig. 4 (b) | Fig. 7 | Fig. 8 |
| | | cord structure | 3+9+15×0.22 (mm) | (1+6) ×0.34 (mm) | 1×5×0.36 (mm) | 1×5×0.36 (mm) |
| | | cord shape | wavy bent | wavy bent | short pitch structure | open structure |
| | | breaking elongation (%) | 3.9 | 4.2 | 4.6 | 4.5 |
| | | breaking strength (N) | 2730 | 1920 | 1510 | 1530 |
| | | cord diameter (mm) | 1.34 | 1.05 | 0.98 | 1.05 |
| | | wavy bend $2a/\lambda$ | 0.58 | 0.66 | – | – |
| | | twist angle with respect to direction of cord axis (°) | – | – | 55.6 | 70 |
| | | Lf/(n×Df) | – | – | 1.08 | 1.32 |
| | | Ls/(m×Ds) | – | – | – | – |
| | | end count (cords/50 mm) | 22.5 | 19.5 | 24.5 | 24.5 |
| evaluation | | external appearance | O | × | O | O |
| | | diameter growth | O | O | O | O |
| | | separation | × | O | O | O |

EP 2 168 787 B1

**Claims**

1.  A pneumatic tire (10) comprising at least one layer of carcass (1) which extends toroidally between at least one pair of bead cores, and 2 to 4 layers of belts (2) having a plurality of cords or filaments as reinforcing elements on the outer circumference of the carcass, wherein
    1 or 2 layers of said belts is (are) employed as a crown reinforcing layer (s) (3) formed by strips which are constituted by orienting a rubber steel cord complex along the tire circumferential direction;
    said crown reinforcing layer is divided into totally 3 parts which are a pair of outside strips (3a) positioned at both sides of the tire width direction and an inside strip (3b) therebetween;
    the breaking elongation (Eo) of steel cords of said outside strips and the breaking elongation (Ei) of steel cords of said inside strip satisfy the following formula:

$$Eo > Ei;$$

    and
    the steel cords of said outside strips are straight, and
    wherein the steel cords of said outside strips have a 1 $\times$ n single-twist structure which is formed by twisting steel filaments in the number of n together wherein n is 3 to 6, and have a twist angle with respect to the direction of the axis of the cord of not more than 65° and not less than 55°, and a breaking elongation of not less than 1.8%, or
    wherein the steel cords of said outside strips have an m x n multiple-twist structure which is formed by twisting strands in the number of m wherein m is 2 to 5, each of the strands being formed by twisting steel filaments in the number of n together wherein n is 3 to 9, and wherein the strands of the steel cord have a twist angle with respect to the direction of the axis of the cord of not more than 69°, and a breaking elongation of not less than 1.8%, or
    wherein the steel cords of said outside strips have a 1 x n single-twist structure which is formed by twisting steel filaments in the number of n together wherein n is 3 to 6, wherein the length (Lf) of a circle which connects the centers of the steel filaments and the sum (n x Df) of the diameters (Df) of the steel filaments satisfy the following formula:

$$2.8 \geq Lf/(n \times Df) \geq 1.15,$$

    and wherein said steel cords have a breaking elongation of not less than 1.8%, or
    wherein the steel cords of said outside strips have an m x n multiple-twist structure which is formed by twisting strands in the number of m formed by twisting steel filaments in the number of n together wherein n is 3 to 9, wherein the length (Ls) of a circle which connects the centers of the strands and the sum (m x Ds) of the diameters (Ds) of the strands satisfy the following formula:

$$2.8 \geq Ls/(m \times Ds) \geq 1.15,$$

    and wherein said steel cords have a breaking elongation of not less than 1.8%.

2.  The pneumatic tire according to claim 1, wherein the breaking strength (To) per unit width of said outside strip and the breaking strength (Ti) per unit width of said inside strip satisfy the following formula:

$$To/Ti \geq 0.92.$$

3.  The pneumatic tire according to claim 1, wherein the breaking elongation (Eo) of the steel cords of said outside strips and the breaking elongation (Ei) of the steel cords of said inside strip satisfy the following formula:

$$2.5 \geq Eo/Ei \geq 1.05.$$

4. The pneumatic tire according to claim 1, wherein the cord diameter (Do) of the steel cords of said outside strips and the cord diameter (Di) of the steel cords of said inside strip satisfy the following formula:

$$1.15 \geq Do/Di \geq 0.85.$$

5. The pneumatic tire according to claim 1, wherein the width (Wi) of said inside strip with respect to the total width (Wt) of said crown reinforcing layer satisfies the following formula:

$$0.95 \times Wt \geq Wi \geq 0.5 \times Wt.$$

**Patentansprüche**

1. Luftreifen (10), der mindestens eine Karkassenlage (1), die sich ringförmig zwischen mindestens einem Paar von Wulstkernen erstreckt, und zwei bis vier Gürtellagen (2) mit einer Vielzahl von Korden oder Filamenten als Verstärkungselemente auf dem Außenumfang der Karkasse aufweist, wobei
   eine oder zwei Gürtellagen als eine Zenitverstärkungslage(n) (3) eingesetzt wird (werden), die durch Streifen gebildet wird (werden), die durch Ausrichten eines GummiStahlkord-Komplexes längs der Umfangsrichtung des Reifens gebildet werden;
   wobei die Zenitverstärkungslage in insgesamt drei Teile unterteilt wird, die ein Paar von äußeren Streifen (3a), die auf beiden Seiten der Breitenrichtung des Reifens positioniert sind, und ein innerer Streifen (3b) dazwischen sind;
   wobei die Reißdehnung (Eo) der Stahlkorde der äußeren Streifen und die Reißdehnung (Ei) der Stahlkorde des inneren Streifens die folgende Formel erfüllen:

$$Eo > Ei;$$

   und
   wobei die Stahlkorde der äußeren Streifen gerade sind, und,
   wobei die Stahlkorde der äußeren Streifen eine 1 x n Einfachdrehungsstruktur aufweisen, die durch Drehen der Stahlfilamente in der Anzahl von n miteinander gebildet wird, worin n 3 bis 6 ist, und die einen Drehungswinkel mit Bezugnahme auf die Richtung der Achse des Kordes von nicht mehr als 65° und nicht weniger als 55° aufweisen und eine Reißdehnung von nicht weniger als 1,8 %, oder
   wobei die Stahlkorde der äußeren Streifen eine m x n Mehrfachdrehungsstruktur aufweisen, die durch Drehen von Strängen in der Anzahl von m gebildet wird, worin m 2 bis 5 ist, wobei ein jeder der Stränge durch Drehen von Stahlfilamenten in der Anzahl von n miteinander gebildet wird, worin n 3 bis 9 ist, und wobei die Stränge des Stahlkordes einen Drehungswinkel mit Bezugnahme auf die Richtung der Achse des Kordes von nicht mehr als 69° aufweisen und eine Reißdehnung von nicht weniger als 1,8 %, oder
   wobei die Stahlkorde der äußeren Streifen eine 1 x n Einfachdrehungsstruktur aufweisen, die durch Drehen von Stahlfilamenten in der Anzahl von n miteinander gebildet wird, worin n 3 bis 6 ist, wobei die Länge (Lf) eines Kreises, der die Mitten der Stahlfilamente verbindet, und die Summe (n x Df) der Durchmesser (Df) der Stahlfilamente die folgende Formel erfüllen:

$$2{,}8 \geq Lf/(n \times Df) \geq 1{,}15,$$

   und worin die Stahlkorde eine Reißdehnung von nicht weniger als 1,8 % aufweisen, oder
   wobei die Stahlkorde der äußeren Streifen eine m x n Mehrfachdrehungsstruktur aufweisen, die durch Drehen von Strängen in der Anzahl von m gebildet wird, die durch Drehen von Stahlfilamenten in der Anzahl von n miteinander gebildet werden, worin n 3 bis 9 ist, wobei die Länge (Ls) eines Kreises, der die Mitten der Stränge verbindet, und die Summe (m x Ds) der Druchmesser (Ds) der Stränge die folgende Formel erfüllen:

$$2{,}8 \geq Ls/(m \times Ds) \geq 1{,}15,$$

und worin die Stahlkorde eine Reißdehnung von nicht weniger als 1,8 % aufweisen.

2. Luftreifen nach Anspruch 1, bei dem die Reißfestigkeit (To) pro Breiteneinheit des äußeren Streifens und die Reißfestigkeit (Ti) pro Breiteneinheit des inneren Streifens die folgende Formel erfüllen:

$$To/Ti \geq 0{,}92.$$

3. Luftreifen nach Anspruch 1, bei dem die Reißdehnung (Eo) der Stahlkorde der äußeren Streifen und die Reißdehnung (Ei) der Stahlkorde des inneren Streifens die folgende Formel erfüllen:

$$2{,}5 \geq Eo/Ei \geq 1{,}05.$$

4. Luftreifen nach Anspruch 1, bei dem der Korddurchmesser (Do) der Stahlkorde der äußeren Streifen und der Korddurchmesser (Di) der Stahlkorde des inneren Streifens die folgende Formel erfüllen:

$$1{,}15 \geq Do/Di \geq 0{,}85.$$

5. Luftreifen nach Anspruch 1, bei dem die Breite (Wi) des inneren Streifens mit Bezugnahme auf die Gesamtbreite (Wt) der Zenitverstärkungslage die folgende Formel erfüllt:

$$0{,}95 \times Wt \geq Wi \geq 0{,}5 \times Wt.$$

**Revendications**

1. Bandage pneumatique (10), comprenant au moins une couche de carcasse (1) s'étendant toroïdalement entre au moins une paire de tringles, et deux à quatre couches de ceinture (2), comportant plusieurs câblés ou filaments comme éléments de renforcement sur la circonférence externe de la carcasse, dans lequel
une ou deux couches desdites ceintures est (sont) utilisée (s) comme couche(s) de renforcement de sommet (3), formée(s) par des bandes constituées en orientant un complexe de caoutchouc de câblés d'acier le long de la direction circonférentielle du bandage pneumatique ;
ladite couche de renforcement de sommet est divisée au total en trois parties, constituées par une paire de bandes externes (3a), positionnées au niveau des deux côtés de la direction de la largeur du bandage pneumatique, et une bande interne (3b) agencée entre elles ;
l'allongement à la rupture (Eo) des câblés d'acier desdites bandes externes et l'allongement à la rupture (Ei) des câblés d'acier de ladite bande interne satisfont la formule ci-dessous :

$$Eo > Ei \ ;$$

et
les câblés d'acier desdites bandes externes sont droites ; et

dans lequel les câblés d'acier desdites bandes externes ont une structure à torsion unique de 1 x n, formée par assemblage par torsion de filaments d'acier, au nombre de n, n étant compris entre 3 et 6, et forment un angle de torsion par rapport à la direction de l'axe du câblé non supérieur à 65° et non inférieur à 55°, et présentant un allongement à la rupture non inférieur à 1,8% ; ou

dans lequel les câblés d'acier desdites bandes externes ont une structure à torsions multiples de m x n, formée par torsion de brins, au nombre de m, m étant compris entre 2 et 5, chacun des brins étant formé par assemblage par torsion de filaments, au nombre de n, n étant compris entre 3 et 9, et dans lequel les brins du câblé d'acier forment un angle de torsion par rapport à la direction de l'axe du câblé non supérieur à 69°, et présentent un allongement à la rupture non inférieur à 1,8% ; ou

dans lequel les câblés d'acier desdites bandes externes ont une structure à torsion simple de 1 x n, formée par assemblage par torsion de filaments d'acier, au nombre de n, n étant compris entre 3 et 6, dans lequel la longueur (Lf) d'un cercle connectant les centres des filaments d'acier et la somme (n x Df) des diamètres (Df) des filaments d'acier satisfont la formule ci-dessous :

$$2,8 \geq Lf / (n \ x \ Df) \geq 1,15 \ ;$$

et dans lequel lesdits câblés d'acier présentent un allongement à la rupture non inférieur à 1,8%, ou

dans lequel les câblés d'acier desdites bandes externes ont une structure à torsions multiples de m x n, formée par la torsion de brins, au nombre de m, formés par assemblage par torsion de filaments d'acier, au nombre de n, n étant compris entre 3 et 9, dans lequel la longueur (Ls) d'un cercle connectant les centres des brins et la somme (m x Ds) des diamètres (Ds) des brins satisfont la formule ci-dessous :

$$2,8 \geq Ls / (m \ x \ Ds) \geq 1,15,$$

et dans lequel lesdites câblés d'acier présentent un allongement à la rupture non inférieur à 1,8%.

2. Bandage pneumatique selon la revendication 1, dans lequel la résistance à la rupture (To) par unité de largeur de ladite bande externe et la résistance à la rupture (Ti) par unité de largeur de ladite bande interne satisfont la formule ci-dessous :

$$To/Ti \geq 0,92.$$

3. Bandage pneumatique selon la revendication 1, dans lequel l'allongement à la rupture (Eo) des câblés d'acier desdites bandes externes et l'allongement à la rupture (Ei) des câblés d'acier de ladite bande interne satisfont la formule ci-dessous :

$$2,5 \geq Eo/Ei \geq 1,05.$$

4. Bandage pneumatique selon la revendication 1, dans lequel le diamètre de câblé (Do) des câblés d'acier desdites bandes externes et le diamètre de câblé (Di) des câblés d'acier de ladite bande interne satisfont la formule ci-dessous :

$$1,15 \geq Do/Di \geq 0,85.$$

5. Bandage pneumatique selon la revendication 1, dans lequel la largeur (Wi) de ladite bande interne par rapport à la largeur totale (Wt) de ladite couche de renforcement de sommet satisfait la formule ci-dessous :

$$0.95 \times Wt \geq Wi \geq 0.5 \times Wt.$$

Fig.1

Fig.2

Fig.3

EP 2 168 787 B1

Fig.4

(a)   (b)

Fig.5

Fig.6

Fig.7

15

Fig.8

Fig.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2623003 A
- EP 2106930 A
- US 20020033213 A